Europäisches Patentamt

(19) European Patent Office

Office européen des brevets

(11) Publication number: **0 216 478**
**B1**

(12) EUROPEAN PATENT SPECIFICATION

(45) Date of publication of the patent specification:
04.04.90

(51) Int. Cl.⁴: **F16D 65/56**

(21) Application number: 86306075.2

(22) Date of filing: 06.08.86

(54) Drum brake adjusters.

(30) Priority: 03.09.85 US 771770

(43) Date of publication of application:
01.04.87 Bulletin 87/14

(45) Publication of the grant of the patent:
04.04.90 Bulletin 90/14

(84) Designated Contracting States:
DE FR GB IT

(56) References cited:
GB-A- 2 060 094
GB-A- 2 088 977
US-A- 2 570 398
US-A- 3 050 156
US-A- 3 103 992
US-A- 3 963 100
US-A- 4 148 380

(73) Proprietor: GENERAL MOTORS CORPORATION,
General Motors Building 3044 West Grand Boulevard,
Detroit Michigan 48202(US)

(72) Inventor: Shellhause, Ronald L., 519 Bennert Drive,
Vandalia Ohio 45377(US)

(74) Representative: Denton, Michael John et al, Patent
Section - Luton Office (F6) Vauxhall Motors Limited P.O.
Box 3 Kimpton Road, Luton Bedfordshire LU2 0SY(GB)

ACTORUM AG

## Description

This invention relates to adjuster mechanisms for use in drum brakes.

More particularly, the invention is concerned with a mechanism of the expandable-strut type using a screw-nut adjusting arrangement, with all the actuating mechanism being self-contained as a part of the expandable strut.

Such adjuster mechanisms in conformity with the invention are particularly useful in leading-trailing drum brake arrangements, but their application is not limited to such arrangements.

A typical drum brake adjuster in common use in production motor vehicles uses an expandable strut with an adjuster screw-nut or star wheel rotated thereon to move on threads to increase the effective strut length to adjust the brake shoes as needed. The screw-nut or star wheel is actuated by a pawl formed as a part of a pawl lever. The pawl lever is usually pivoted on the web of one of the brake shoes or some other brake member such as a wheel cylinder housing, a brake shoe anchor or a backing plate. The pawl lever is commonly springloaded for operation. One example of such an adjuster is shown in US-A-3 963 l00. This expandable strut adjuster has an operating arm for mechanical operation pivoted to one of the shoes. The strut extends between the shoes and includes a ratchet formed on the outer periphery of a nut threaded on a portion of the adjustable-length strut. A pawl lever has one arm carrying a pawl which co-operates with a ratchet, a second arm engaging one end of the strut, and biasing means urging the second arm into permanent engagement with the end of the strut to urge it axially into engagement with the operating arm. The brake assembly in which the adjuster is installed has a parking brake lever or operating arm pivoted on the web of the other shoe, and therefore at the opposite end of the expandable strut from the pawl lever. This arrangement requires the assembly of several parts on a brake shoe, as well as mirror-image parts for left-hand and right-hand drum brakes.

Adjusters of the type shown in the said US-A-3 963 l00 have sometimes been provided with a thermal expansion spring element comprising two leaves joined at a hinge-like section, the two leaves having aligned openings through which the threaded part of the adjuster is received so that the leaves are positioned between the tubular part and the adjuster nut. When this element is exposed to high brake temperatures, the spring element normally expands so that the leaves move apart, so increasing the space between the tubular part and the adjuster nut and overcoming the force of the pawl lever spring in so doing, and thereby causing the strut to increase in effective length and act as if the brakes have not been expanded as much as is actually the case. This action therefore prevents the adjuster mechanism from adjusting for hot brake drum expansion by thermally expanding the length of the adjustable strut under these conditions. Also, the location of the thermo-sensitive element in the area of the strut is such that if the brake is applied heavily, and rapid and heavy braking action is taking place, the brake heat may build up so fast that the thermo-sensitive element does not have time to be responsive to the heat build-up, and the brake may adjust irrespective of whether adjustment is in fact required. As or immediately after the brake is released, the thermo-sensitive element will become responsive to the high temperature and will then expand so as to further expand the strut. This can cause the brake shoes to drag, since the expansion of the strut is in effect a brake-actuation type of movement. This can in turn cause more brake lining wear than would otherwise be the case, and can also generate brake heat which may even be sufficient to maintain the thermo-sensitive element in the expanded position so that the brakes continue to drag. The arrangement can therefore defeat the very purpose for which it is intended.

A similar known arrangement is shown in GB-A 2 088 977. In this case, thermo-sensitive elements in the form of springs are used to prevent overadjustment. This arrangement still has the disadvantages detailed above.

In the structures embodying the invention, the thermo-sensitive element or elements are not thermally loaded in a direction which will force any additional drag on the brake shoes whenever the high temperatures resulting from excessive brake heat are sensed. Even if the elements do not immediately sense the heat because of a fast rise in brake temperature due to fast and heavy brake actuation, the elements will not cause the shoes to be further expanded in addition to effecting brake adjustment. Therefore the elements will not permit the brake system to get into a condition which is degenerative because of the action of the thermo-sensitive element under the adverse conditions described above.

Expandable strut-adjusting mechanisms of the type used in duo-servo brakes are typically shown in US-A 3 050 156 and US-A 3 103 992, these adjusters also being actuated by pawls which are pivoted on a brake shoe web.

US-A 2 570 398 discloses a leading-trailing shoe adjusting mechanism using a star wheel to expand a strut. When adjustment is required, a pawl mounted on a brake shoe web is rotated against a pawl spring to advance the pawl to the next tooth on the star wheel. When the brake is released, the pawl spring moves the pawl in the other direction and rotates the wheel through an angle corresponding to the one tooth. In the mechanism disclosed in the said patent, the pawl is part of an arm which comprises a bi-metal blade. If the brake becomes hot from prolonged application, the bi-metal blade will bend away from the wheel and the pawl will not contact a new tooth even if the brake clearance is greater than normal.

By the present invention there is provided a drum brake adjuster having the features specified in claim I hereof.

Preferred embodiments of drum brake adjuster mechanisms in accordance with the present invention include a self-contained expansion strut in which the left-hand and right-hand parts are the same. This therefore permits adjusters to be manufactured for the brakes for the left-hand side and the right-hand side of a vehicle without any changes in construction or numbers of parts, for example. The present mechanisms utilise an escapement drive which may readily provide fine or close adjustment. The mechanisms may include a spring which is sensitive to the higher temperatures occurring in the drum brake with hard braking, and operates to disable the adjuster while such higher temperatures exist. This prevents the adjuster mechanism from over-adjusting as a result of heat expansion of the brake drum increasing the distance required for the shoes to move to engage the drum and therefore resulting in a signal being sent to the adjuster mechanism indicating that adjustment is required when in fact no adjustment may be needed after the brake has cooled off. If adjustment is accomplished while the brake is extremely hot, the amount of adjustment may be sufficiently great to leave the brakes locked up after the drum cools and contracts, because it then contracts to an extent such that it engages the brake shoes in braking relation, even with the brakes in the released condition.

In one embodiment of a drum brake adjuster in accordance with the present invention, the escapement mechanism used is of the anchor or crown-wheel type. In another embodiment, the escapement mechanism is of the sliding-frame type. Either mechanism uses the escapement pallets as drive members which drive the escape-wheel. The escape-wheel is formed as part of the adjusting nut. Use of either embodiment permits the adjuster mechanism to be tailored to the particular brakes involved by replacing the escapement mechanism providing one adjustment level with an escapement mechanism providing a different adjustment level. By way of example, it is generally accepted that a travel of 0.76 mm (0.030 inch) is necessary for a normal effort stroke or apply stroke by the wheel cylinder. In the typical wheel cylinder with opposed pistons each driving a plunger connected to one of the brake shoes, this would be assumed to be 0.38 mm (0.0l5 inch) per piston. In any event, a strut in conformity with the present invention will accommodate the whole of the travel of the pistons without any need to take account of different individual piston travels. Any additional distance over the basic 0.76 mm (0.030 inch) apply stroke would be the added gap to provide the established desired clearance. Fine or close adjustment to a level of 0.38 mm (0.0l5 inch) centre line clearance is easily accomplished with double-acting escapement mechanisms in conformity with the invention as disclosed herein.

In the drawings:

Figure l is an elevational view, having parts broken away and in section, of a drum brake assembly including a first embodiment of a drum brake adjuster in accordance with the present invention, the drum brake assembly being shown in the brake-released position;

Figure 2 is an enlarged view of a portion of Figure I, likewise with parts broken away and in section, but illustrating the brake assembly of Figure I in the brake-apply position;

Figure 3 is a fragmentary cross-sectional view, having parts broken away, of a part of the brake adjuster mechanism of Figure 2, in the direction of arrows 3--3 of that Figure;

Figure 4 is a perspective view, with parts broken away and in section, of escapement mechanism used in the brake adjuster mechanism of Figures I and 2, in the direction of arrows 4--4 of Figure 2;

Figure 5 is a view similar to Figure I, with parts broken away and in section, but showing a second embodiment of a drum brake adjuster in accordance with the present invention, the drum brake assembly being shown in the brake-released position;

Figure 6 is a fragmentary cross-sectional view, in the direction of arrows 6--6 of Figure I, illustrating a part of escapement mechanism in conformity with the invention;

Figure 7 is an elevational view, having parts broken away and in section, of the escapement mechanism in the direction of arrows 7--7 of Figure 6;

Figure 8 is a perspective view, with parts broken away and in section, of a major portion of the brake adjuster mechanism of Figure 5;

Figure 9 is another view similar to Figure I, with parts broken away, showing another embodiment of the drum brake adjuster in accordance with the invention, the drum brake assembly being shown in the brake-release position;

Figure l0 is a fragmentary cross-sectional view in the direction of arrows l0--l0 of Figure 9, and illustrating the brake adjuster mechanism of that Figure;

Figure ll is a fragmentary cross-sectional view in the direction of arrows ll--ll of Figure 9 and illustrating a portion of the brake adjuster mechanism of that Figure; and

Figure l2 is an enlarged view of a portion of the brake adjuster mechanism shown in Figure l0 but showing the mechanism with the strut expanded to provide adjustment action.

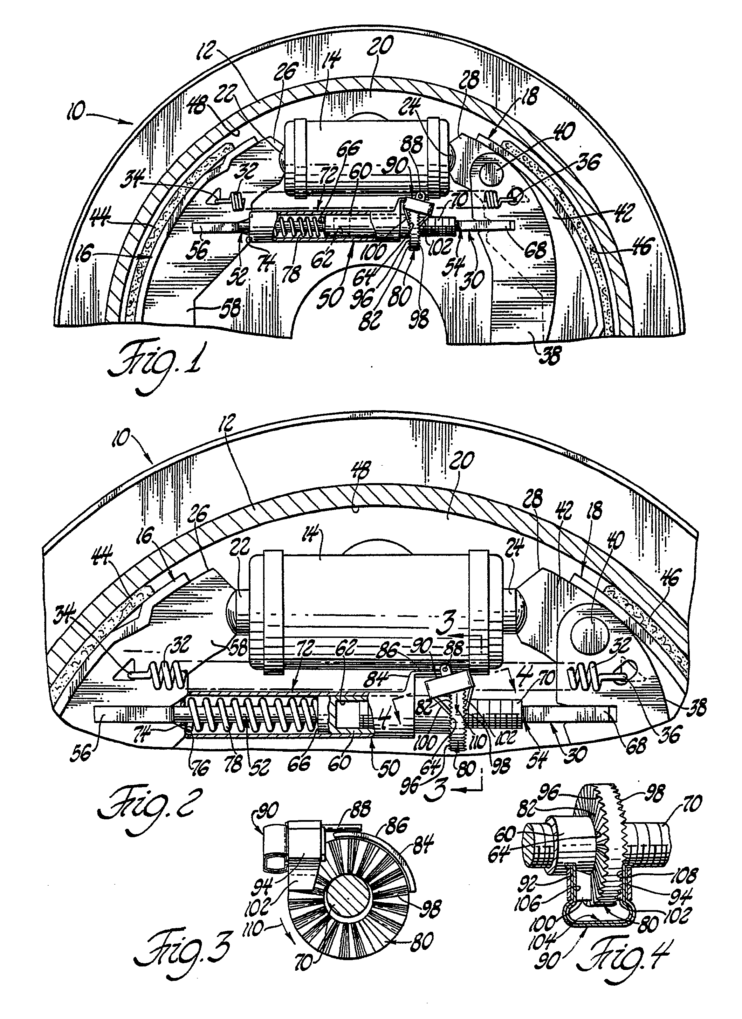

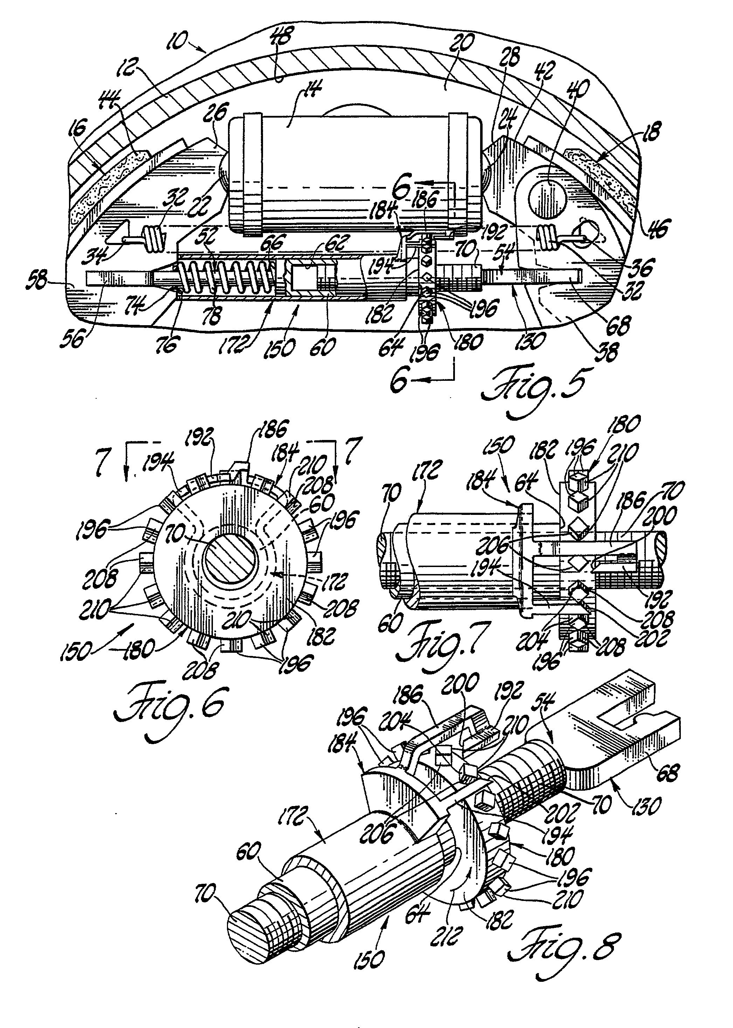

The drum brake assembly l0 illustrated in Figures I, 2, 5 and 9 includes a drum l2 to be braked, a wheel cylinder l4, and brake shoes l6 and l8 mounted on a backing plate 20. The wheel cylinder l4 is of the typical opposed-piston type, with the pistons therein driving opposed plungers 22 and 24. The plunger 22 engages the shoe end 26 of the brake shoe l6, and the plunger 24 engages the shoe end 28 of the brake shoe l8. The drum brake assembly illustrated is preferably of the leading-trailing type in which the shoe l6 is the leading shoe and the shoe l8 is the trailing shoe. The ends of the shoes opposite the shoe ends 26 and 28 are anchored to the backing plate in a manner well known in the art and not shown in the drawings. A strut 30, l30 or 330 engages and extends between the brake shoes l6 and l8. The strut 30 is used to mechanically apply the brakes and includes an adjuster mechanism for adjusting the released position of the brake shoes, established by the minimum effective length of the strut. A retraction spring 32 has one spring end 34 secured to the shoe l6 and the other spring end 36 secured to the shoe l8. A parking brake actuating lever 38 is pivotally secured at 40 to the shoe web 42 of the shoe 18 and is also positioned in engageable relation with one end of the brake adjuster mechanism 30, 130 or 330. As is well known in the art, clockwise movement of the lever 38 about its pivot 40, as viewed in Figures 1 and 2, will result in mechanical force being exerted through the strut 30, 130 or 330 to expand the shoes 16 and 18 until the shoe linings 44 and 46 engage the friction braking surface 48 provided on the interior of the brake drum 12.

The strut 30 of Figures 1 and 2 has a brake adjuster mechanism 50 formed as a part thereof. The strut assembly includes axially aligned strut sections 52 and 54. The strut section 52 has one end 56 which is notched in the usual manner and fits within a notch in the shoe web 58 of the brake shoe 16, as is well known in the art, so as to engage that shoe in force-transmitting relation. The other end of the strut section 52 is formed as a tube portion 60 provided with a recess 62 so that the tube open end 64 extends towards the brake shoe 18. A shoulder 66 is formed on the tube portion 60 where the strut section end 56 joins the tube portion. The strut section 54 has an end 68 formed similarly to the end 56 of the strut section 52, and also has an externally threaded portion 70 which extends towards the brake shoe 16 and is received in the recess 62 of the tube portion 60 for reciprocal movement. The strut section end 68 engages the brake shoe web 42 of the shoe 18 and also engages the parking brake lever 38, as is well known in the art.

A sleeve 72 is coaxially received over the strut portion 52. The sleeve 72 has one end 74 through which the strut section 52 extends. The sleeve end 74 is normally in abutting relation with the shoe web 58, and is slotted so that it is held against rotation by receipt of a portion of the shoe web 58 within the slot. The sleeve end 74 provides an annular spring seat 76 on the inner side thereof, the spring seat surrounding a portion of the strut section 52. A compression spring 78 is received within the sleeve 72 about the strut section 52, and has one end abutting the shoulder 66 and the other end abutting the spring seat 76. The spring 78 urges the strut section 54 towards the shoe 18 and the sleeve 72 towards the shoe 16. An adjuster nut 80 is threaded on the externally threaded portion 70 of the strut section 54 so that one nut side 82 is axially engageable with the tube open end 64. The position of the adjuster nut 80 on the externally threaded portion 70 of the strut section 54, co-operating with the tube open end 64 of the strut section 52, thus establishes the minimum effective length of the strut 30.

The portion of the escapement mechanism for rotating the adjuster nut 80 to obtain brake adjustment is supported on the sleeve 72 by a frame 84 which has an arm 86 extending over the outer periphery of the adjuster nut 80. The escapement verge (pivot pin) 88 is secured to the arm 86 so that its axis is in perpendicular skew relation to the common axis of the strut sections 52 and 54 and the sleeve 72. The verge 88 pivotally supports a U-shaped member 90 which is the escapement drive means of the escapement mechanism. The member 90 has arms 92 and 94 which straddle the adjuster nut 80. The adjuster nut 80 has face teeth 96 formed on the side 82 thereof, and face teeth 98 formed on the other side thereof. The adjuster nut 80, with its face teeth 96 and 98, forms an escape-wheel which is the escapement driven member of the escapement mechanism.

The arms 92 and 94 straddle the adjuster nut (escape-wheel) 80, and respectively have pallets 100 and 102 formed on the ends thereof. The pallets 100 and 102 are positioned in co-operation with the teeth 96 and 98 to engage those teeth in alternate driving relation. A temperature-sensitive bi-metal spring 104 may be mounted on the U-shaped member 90. The spring 104 may also be generally U-shaped so that its substantially parallel legs 106 and 108 are received within the U-shaped member 90 and engage the arms 92 and 94. The spring 104 does not normally exert a pressure on the arms 92 and 94 which will move them apart. However, with an increase in brake operating temperature when the brake has been applied heavily, so that the brake drum 12 has expanded to the extent that it is no longer desirable to adjust the brake shoes in accordance with the distance between the brake shoe linings and the drum friction surface 48, the heat within the brake will cause the spring 104 to expand its legs 106 and 108 apart, so moving the arms 92 and 94 outwardly and axially away from the adjuster nut 80 so that the pallets 100 and 102 cannot engage the teeth 96 and 98 in driving relation irrespective of the tendency of the adjusting mechanism to cause them to do so. This will render the adjuster escapement mechanism ineffective to adjust the brake as long as the brake temperature is at or above the predetermined brake temperature beyond which it is not desired to make such adjustments. This will prevent over-adjustment of the brake under such high heat conditions.

Instead of, or in addition to, the bi-metal spring 104, the spring 78 may be a bi-metal spring also sensitive to such brake temperatures so that the spring 78 will contract at the predetermined temperature beyond which it is not desired to provide brake adjustment. As will be described below in relation to the operation of the adjuster mechanism, this will likewise prevent over-adjustment of the brake in response to that condition.

In the brake-released condition illustrated in Figure 1, the brake shoes 16 and 18 are retracted so that their respective brake linings 44 and 46 are spaced radially inwardly to the desired extent from the friction-braking surface 48 of the drum 12, and they are held in this position by the retraction spring 32. The brake shoe 16, in abutting engagement with the sleeve 72 and also with the strut section 52, has moved the sleeve 72 against the compressive force of the spring 78 so that the verge 88 is near or beyond the plane of the side of the adjuster nut 80 on which the teeth 98 are formed. In moving to this position, the U-shaped escapement drive member 90 is pivoted on the verge 88 and about the point of engagement of the pallet 102 with one of the teeth 98, thereby raising the pallet 100 over one of the teeth 96. The mechanism is therefore in the position shown in Figure 1. The tube open end 64 of the strut section 52 is in abutting engagement with the side 82 of the adjuster nut 80, and the effective minimum length of strut 30 is therefore established. This effective minimum length establishes the spacing between the brake shoes 16 and 18 and therefore the amount of clearance between the brake linings 44 and 46 in relation to the brake drum friction braking surface 48.

When the brake is actuated by brake pressure transmitted to the wheel cylinder 14, the plungers 22 and 24 are moved outwardly of the wheel cylinder to move the brake shoes 16 and 18 into engagement with the friction-braking surface 48 of the drum 12. This occurs against the force of the retraction spring 32. The spring 78 will continue to urge the strut section 52 rightwardly towards the shoe 18, and therefore the strut section end 56 will be maintained in position while the shoe 16 moves leftwardly as viewed in Figures 1 and 2. Since the spring 78 also acts against the sleeve 72, it will move that sleeve in following relation to the shoe 16 so as to maintain the sleeve end 74 in abutting engagement with the shoe web 58. This axial movement of the sleeve 72 will carry with it the support frame 84 and therefore the verge 88. The verge 88 will be moving towards the plane of the side 82 of the adjuster nut 80, and this will cause a slight pivoting or rocking action of the U-shaped escapement drive member 90 about the verge 88. If the leftward movement of the sleeve 72, as viewed in Figures 1 and 2, is insufficient to require adjustment of the strut 30, the pallets 100 and 102 will not exert sufficient force on the teeth 96 and 98 of the adjuster nut to drive the nut rotationally. However, if the amount of shoe actuation required to expand the shoes into contact with the brake drum is sufficient to require adjustment, the escapement drive member 90 will be moved by the support frame 84 and the verge 88 in a direction away from the brake shoe 18 to such an extent that the pallet 100, by escapement action, will cause the adjuster nut 80 to be driven rotationally in the direction indicated by the arrow 110. This will cause the adjuster nut 80 to be moved axially by the threaded action of the nut on the threads of the externally threaded portion 70 of the strut, such axial movement of the nut being leftwardly as viewed in Figures 1 and 2. This will slightly increase the effective minimum length of the strut 30.

Upon brake release, the retracting spring 32 will pull the brake shoes 16 and 18 back towards the position shown in Figure 1, so moving the sleeve 72 rightwardly relative to the strut section 54 and the adjuster nut 80 as viewed in those Figures and again compressing the spring 78 in so doing. This rightward movement of the sleeve 72 will also cause the frame 84 and the verge 88 to move rightwardly back to the position shown in Figure 1. This movement will cause the pallet 102 to move the adjuster nut (escape-wheel) 80 further in the direction of the arrow 110, so completing the double-acting adjustment of the strut 30 by means of the escapement mechanism.

If the heat generated by actuation of the brake assembly 10 is sufficient to raise the temperature in the area of the spring 78 to the predetermined temperature above which it is not desired to provide adjustment, and if the spring 78 is a bi-metal spring which will contract at such higher temperatures, the contraction of the spring 78 under such conditions will result in less or even no leftward movement of the sleeve 72 during brake actuation since the amount of expansion of the spring 78 would therefore be decreased or even reduced to zero. Therefore there would be no leftward movement of the spring 72 and there would be no adjustment actuation of the escapement mechanism.

If the bi-metal spring 104 is used, either independently of the bi-metal construction of the spring 78 or concurrently therewith, the expansion of the spring 104 to remove the pallets 100 and 102 from engagement with the teeth 96 and 98 of the adjuster wheel 80 will also render the adjustment mechanism inoperative to adjust the brake when the temperature is sufficient to cause the bi-metal spring 104 to so expand.

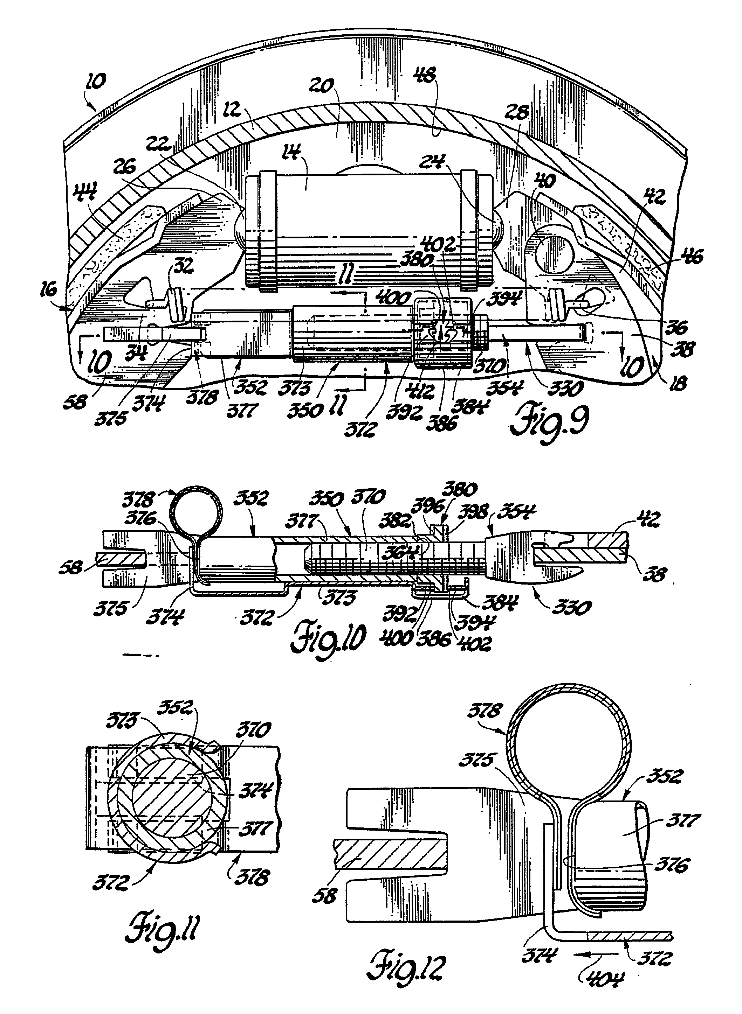

The embodiment shown in Figures 5 to 8 of the drawings is a modification of the embodiment shown in Figures 1 to 4. Since many of the brake elements are the same or similar, similar reference numerals have been used where appropriate. The strut and adjuster mechanism forming a part of the strut are somewhat different from the corresponding parts of the earlier-described embodiment. Otherwise the brake construction is the same as that shown in Figures 1 to 4, such that the description thereof will not be repeated. The strut assembly 130 of Figures 5 to 8 has a brake adjuster mechanism 150 formed as a part thereof. The strut assembly has like or similar axially aligned strut sections 52 and 54 constructed and arranged as shown and described in relation to Figures 1 to 4. A somewhat modified sleeve 172 is coaxially received over the strut portion 52. The sleeve modification is in the area of the support frame and the escapement drive means. The other portions of the sleeve are constructed in the same manner as for the sleeve 72 of Figure 1. The spring 78 acting on the sleeve 172 and on the strut section 52 is a similar spring to that shown in Figure 1, and in the same way as described above the spring 78 may be a bi-metal spring which contracts at elevated temperatures and prevents adjustment when the brake is overheated.

A modified adjuster nut 180 is threaded on the externally threaded portion 70 of the strut section 54 so that the nut side 182 is axially engageable with the tube open end 64. Because the nut 180 is to be rotated in the opposite direction to the direction of rotation of the nut 80 to expand the strut assembly, the threads on the strut section 54 threaded portion 70 are of the opposite hand to the corresponding threads in the arrangement of Figures 1 to 4.

The modified escapement mechanism for rotating the adjuster nut 180 to obtain brake adjustment is supported on the sleeve 172 by a support frame 184. This frame includes an arm 186 extending over the outer periphery of the adjuster nut 180. The arm 186 is somewhat J-shaped, with the first portion being radially beyond the periphery of the nut 180. The arm 186 terminates in another arm 192 which is positioned radially inwardly relative to the first portion of the arm 186, and may also be slightly circumferentially spaced therefrom, as illustrated. The frame 184 includes another arm 194 which extends across the adjuster nut 180. The adjuster nut is provided with teeth 196, illustated as being formed as small blocks extending radially outwardly from the main body of the adjuster nut 180. The teeth 196 are circumferentially spaced around the outer periphery of the main body of the adjuster nut 180 so that the arm 194 may extend between the teeth as illustrated in the drawings and the arm 192 may, upon sufficient axial movement in the leftward direction as viewed in the drawings, also extend between two adjacent teeth 196. The free ends of the arms 192 and 194 are bevelled to respectively provide escapement pallets 200 and 202. Each tooth 196 is provided with four tooth faces which are in surface-engageable and driving relation with either the pallet 200 or the pallet 202 at various times. More particularly, referring to a single tooth 196, the tooth has faces 204 and 206 which generally face towards the side 182 of the adjuster nut but are in planes at an angle to the major plane of the adjuster nut 180. The tooth also has faces 208 and 210 which generally face towards the other side of the adjuster nut and are similarly angularly positioned.

Therefore, as viewed in the drawings the teeth 196 appear somewhat like cubes with the four teeth faces being so arranged that the face 206 is at times engageable by the pallet 202 and the face 210 is at times engageable by the pallet 200. The relative axial spacing of the pallets 200 and 202 is such that when the arm 192 is moved leftwardly until the pallet 200 engages a toothed face 210, the arm 194 is moved sufficiently leftwardly to be clear of the rotating path of the teeth 196. Therefore the escapement drive movement of the escape-wheel adjuster nut 180 by means of pallet 200 and one of the teeth will not be obstructed by the location of the arm 194. Similarly, when the arms 192 and 194 are moved rightwardly as viewed in the drawings such that the pallet 202 acts on the tooth face 206, the arm 192 will be moved so as to be clear of the rotating path of the teeth 196 to accommodate movement of the adjuster nut 180 by the escapement drive mechanism.

When the brake is actuated, the operation is generally similar to that of the first embodiment described above. The sleeve 172 will move leftwardly relative to the strut sections 52 and 54 under the force of the spring 78, carrying with it the escapement drive mechanism formed by the frame 184. If the leftward axial movement is sufficient, the pallet 200 will engage a tooth face 210 and, due to the bevelled arrangement thereof, will then move the tooth and therefore the adjuster nut 180 rotationally in the direction of the arrow 212. This will, by threaded action of the threaded portion 70, cause the adjuster nut 180 to be moved slightly leftwardly, so providing some adjustment to the mechanism. As the brake is released, the sleeve 172 will move rightwardly to return to the position shown in Figure 5, so that the pallet 202 will engage a toothed face 206 and will move a tooth 196 and therefore the adjuster nut 180 slightly further in the direction of the arrow 212, thereby accommodating a slight additional adjustment of the mechanism. If there is insufficient movement of the sleeve 172 in the leftward direction to cause the pallet 200 to engage the tooth face 210 and then, by further leftward movement, to move the tooth, no adjustment of the mechanism will be required or accomplished. Upon subsequent brake release, the sleeve 172 and the escapement drive mechanism, including the pallet 202, will merely return to the position shown without engaging a tooth in drive relation. Therefore the adjuster mechanism 150 will not make an adjustment which is not required.

As described above, when the spring 78 is a bimetal spring which contracts at elevated brake temperatures occurring when it is not desirable to adjust the mechanism, the sleeve 172 will not be moved leftwardly sufficiently to cause adjustment.

The embodiment shown in Figures 9 to 12 of the drawings is a modification of the embodiment shown in Figures 5 to 8. Since many of the brake elements are the same or similar, like reference numerals have been used where appropriate. The strut and adjuster mechanism forming a part of the strut are somewhat different from the corresponding parts of the earlier-described embodiment of Figures 1 to 4. In other respects the brake construction is the same as that shown in Figures 1 to 4, such that the description thereof will not be repeated. The strut assembly 330 of Figures 9 to 12 has a brake adjuster mechanism 350 formed as a part thereof. The strut assembly has axially aligned strut portions 352 and 354 constructed and arranged in a manner similar to those shown and described in relation to Figures 1 to 8 above. A modified sleeve 372 is coaxially recieved over the strut portion 352. The sleeve modification is in the area of the body, at one end, and the escapement drive means at the other end. The body 373 of the sleeve 372 is formed to be clipped over the strut portion 352, as is better seen in Figure 11. The sleeve end 374 is slotted to receive a flat end 375 of the strut portion 352 about which the sleeve body 373 is clipped. A spring 378, acting on the sleeve 372 and on the end 376 of the strut part 377, is a bi-metal spring which contracts at elevated temperatures so that it exerts no spring force between the sleeve end 374 and the strut abutment 376 and prevents adjustment when the brake is overheated.

A further modified adjuster nut 380, constructed much like the nut 80 of Figures 1 to 4, is threaded on the externally threaded portion 370 of the strut section 354 so that the nut side 382 is axially engageable with the tube open end 364. The nut 380 is to be rotated in the opposite direction of rotation to that of the nut 80 for the purpose of expanding the strut assembly. Therefore the threads on the strut section threaded portion 370 are of the opposite hand to the similar threads in the arrangement of Figures 1 to 4.

The modified escapement mechanism for rotating the adjuster nut 380 to obtain brake adjustment is formed as an integral stamped part of the sleeve 372 on the sleeve end 384. This includes an arm 386 extending over the outer periphery of the adjuster nut 380. The arm 386 has another arm 392 which is struck so as to be positioned radially inwardly relative to the body of the arm 386. The arm 386 includes another arm 394 which is also struck so as to be positioned radially inwardly relative to the body of the arm 386. The arms 392 and 394 are therefore on opposite sides of the adjuster nut 380. The adjuster nut 380 is provided with side face teeth 396 and 398 respectively aligned for driving engagement with teeth 400 and 402 formed on the arms 392 and 394. The teeth 400 and 402 respectively provide escapement pallets for escapement driving action. Use of one tooth 400, 402 on each arm 392, 394 will give adequately fine adjustment for most brakes. However, if finer adjustments are required, the tooth 400 may be made as two or even three teeth, as may the tooth 402.

When the brake is actuated, the operation is generally similar to that of the second embodiment described above. Specifically, the sleeve 372 will move leftwardly relative to the strut portions 352 and 354 under the force of the spring 378, as indicated by an arrow 404 in Figure l2, and carry with it the escapement drive mechanism formed by the sleeve end 384. If the leftward axial movement is sufficient, the pallet or tooth 402 will engage a tooth 398, and, due to the bevelled arrangement thereof, will then move the tooth and therefore the adjuster nut 380 rotationally in the direction of the arrow 4l2 of Figure 9. This will, by threaded action of the threaded portion 370, cause the adjuster nut 380 to be moved slightly leftwardly, so providing some adjustment to the mechanism. As the brake is released, the sleeve 372 will move rightwardly to return to the position shown in Figure 9, so that the tooth or pallet 400 will engage a tooth 396 and will move the adjuster nut 380 slightly further in the direction of the arrow 4l2, thereby accommodating a slight additional adjustment of the mechanism. If there is insufficient movement of the sleeve 372 in the leftward direction to cause the tooth or pallet 402 to engage a tooth 398 and then, by further leftward movement, to move the tooth, no adjustment of the mechanism will be required or accomplished. Upon brake release, the sleeve 372 and the escapement drive mechanism, including the pallet or tooth 402, will merely return to the position shown in Figure 9 without engaging a tooth in drive relation. Therefore the adjuster mechanism will not make an adjustment which is not required.

As described above, the spring 378 is a bi-metal spring which contracts at elevated brake temperatures occurring when it is not desirable to adjust the mechanism. The sleeve 372 will then not be moved leftwardly, as viewed in Figure l2, sufficiently to cause adjustment.

The invention is thus embodied in a compact escapement drive arrangement which may provide for brake adjustment in either left-hand or right-hand brake assemblies of a vehicle, and which may prevent adjustment when the brake becomes overheated. Any of several types of escapement mechanism may be used, provided that they are sensitive to axial movement of an element such as the sleeve 72, l72 or 372.

## Claims

1. A drum brake adjuster (50) for use in a drum brake assembly having means (14) for expanding first and second brake shoes (16 and 18) to engage a brake drum (12) in braking relation and means (32) for retracting the brake shoes (16 and 18) for disengagement from the brake drum (12) upon release and returning the brake shoes (16 and 18) to an adjusted position determined by the drum brake adjuster (50), the drum brake adjuster (50) comprising an expandable strut (30) adapted to extend between the first and second brake shoes (16 and 18) of the drum brake (10) to be actuated and released and adjusted, the expandable strut (30) comprising a first member (52); a second member (54) telescopically received in the first member (52), and in coaxial relation therewith, the first member (52) being adapted to engage the first brake shoe (16) and the second member being adapted to engage the second brake shoe (18); spring means (78) acting on the first member (52) to continually urge the first member (52) towards the second member (54); an adjusting element (80) on the second member (54) normally engaging the first member (52) in abutting relation to limit the minimum length of the strut (30) and movable on the second member (54) in a direction towards the first member (52) to increase the effective minimum length of the strut (30) when sufficient brake shoe wear and actuation necessitate brake adjustment, the adjusting element (80) including an escapement driven member (96) which is incrementally actuable to provide such adjustment; and escapement drive means (90) engageable, in a brake actuation and release cycle in which brake adjustment is required, in driving relation with the escapement driven member (96) at least once during such a brake actuation and release cycle, the escapement drive means (90) when so engaging the escapement driven member (96) driving the adjusting element (80) to move the same on the second member (54) in a direction axially towards the first member (52) so that when the brake is fully released the first member (52) abuttingly engages the adjusting element (80) at an increased strut minimum-length position to establish an adjusted position of the brake shoes (16 and 18); characterised by a third member (72) telescopically receiving the first member (52) and a portion of the second member (54), and in coaxial relation with the first (52) and second (54) members, the third member (72) being adapted to engage the first brake shoe (16), the spring means (78) acting on the third member (72) to continually urge the third member (72) away from the first member (52), and the escapement drive means (90) being on the third member (72).

2. A drum brake adjuster according to claim 1, wherein the spring means (78) includes a temperature-sensitive spring which, at a predetermined brake temperature, contracts sufficiently to render the spring means (78) unable to move the third member (72) axially relative to the adjusting element (80) and the second member (54) through a sufficient distance to cause the escapement drive means (90) to drive the escapement driven member (96), thereby rendering the adjuster ineffective to change the brake adjustment as long as the brake temperature is at or above the predetermined brake temperature and preventing over-adjustment of the brake under that condition.

3. A drum brake adjuster according to claim 1 or 2, wherein the adjusting element (80) is threadedly mounted on the second member (54) and on rotary movement relative to the second member (54) is movable axially by threaded action in the direction towards the first member (52), the escapement drive means (90) is engageable in driving relation with the escapement driven member (96) during the brake actuation portion of a brake actuation and release cycle in which brake adjustment is required, the escapement drive means (90) when so engaging the escapement driven member (96) drives the adjusting element (80) rotationally to move the same by threaded action on the second member (54) in a direction axially towards the first member (52), and the escapement drive means (90) is further engageable with the escapement driven member (96) in driving relation during the brake release portion of such a cycle, the escapement drive means (90) when so engaging the escapement driven member (96) driving the adjusting element (80) rotationally to move the same by threaded action further on the second member (54) in a direction axially towards the first member (52).

4. A drum brake adjuster according to claim 3, wherein the escapement driven member (96) is a wheel-like nut (80) having face teeth (96, 98) on each side thereof and defining an escape-wheel, the escapement drive means (90) being a generally U-shaped member having arms (92 and 94) straddling the escape-wheel (80) and having a pallet (100, 102) on each of the arms (92 and 94), the U-shaped member having a verge (88) secured to the third member (72) with the axis thereof being perpendicularly skew to the common axis of the first (52) and second (54) and third (72) members, the U-shaped member being arcuately movable about the said verge (88) with the pallets (100, 102) engaging the teeth (96, 98) in alternate driving relation as the third member (72) is moved relative to the second member (54) and the escapement driven member (96) in one axial direction upon brake application and in the opposite axial direction upon brake release, the pallets (100, 102) acting on the teeth (96, 98) to move the escapement driven member (96) arcuately on the second member (54) when the movements of the third member (72) are sufficient to cause first one and then the other of the pallets (100, 102) to advance to an adjacent tooth (96, 98) from the one with which it is aligned for driving engagement while in the brake-released condition.

5. A drum brake adjuster according to claim 4, wherein the U-shaped member has a temperature-sensitive spring (104) mounted thereon and engaging the arms (92, 94) so as to be able to exert a spring force tending to spread the arms (92, 94) apart, the temperature-sensitive spring (104) expanding with an increase in brake temperature and at a predetermined brake temperature expanding sufficiently to move the arms (92, 94) outwardly in a direction axially away from the escape-wheel (80) so that the pallets (100, 102) cannot engage the teeth (96, 98) in driving relation irrespective of the amount of axial movement of the third member (72), thereby rendering the adjuster ineffective to adjust the brake as long as the brake temperature is at or above the predetermined brake temperature and thus preventing over-adjustment of the brake under that condition.

6. A drum brake adjuster according to claim 1, wherein the first member (52) of the expandable strut (30) comprises a first strut section formed at one end with a tube portion (60) having an open end (64) and having the other end (56) of the first strut section adapted to engage the first shoe (16), and the second member (54) of the expandable strut comprises a second strut section formed at one end with an externally threaded portion (70) extending into the said tube portion (60) and having the other end (68) of the second strut section adapted to engage the second shoe (18); wherein the adjusting element (80) comprises an adjuster nut threaded on to the threaded portion (70) of the second strut section and having one side engageable with the open end (64) of the tube portion (60) of the first strut section and co-operating with the strut sections to define the effective length of the strut (30) and therefore the position of the shoes (16 and 18) relative to the brake drum (12) when in the brake-released condition; wherein the third member (72) comprises a sleeve having a spring seat (76) formed on one end (74) thereof with the other end (56) of the first strut section received through the spring seat (76) so that the tube portion (60) of the first strut section is received within the sleeve (72) and extends outwardly therefrom in a direction towards the adjuster nut (80), the sleeve (72) further having a support frame (84) extending over the adjuster nut (80), with the escapement drive means (90) positioned on the support frame (84) to engage the escapement driven member (96) of the adjuster nut (80) in escapement-driving relation; and wherein the spring means (78) is received in the sleeve (72) and acts on the spring seat (76) and the first strut section to continually urge the tube portion (60) of the first strut section in a direction outwardly of the sleeve (72) and against the adjuster nut (80) and to continually urge the sleeve (72) in a direction axially away from the adjuster nut (80); the spring means (78) upon brake actuation moving the sleeve (72) and the support frame (84) and the escapement drive means (90) axially relative to the adjuster nut (80) and upon sufficient of such axial movement causing the escapement drive means (90) to act on the escapement driven member (96) to cause the adjuster nut (80) to rotate arcuately to increase the effective length of the strut (30) and thereby adjust the brake.

7. A drum brake adjuster according to claim 6, wherein the escapement driven member (96) formed on the adjuster nut (80) comprises a double-acting escapement driven member, the escapement drive means (90) formed on the said other end of the sleeve (72) comprises a double-acting escapement drive means positioned to engage the double-acting escapement driven member (96) in double-acting escapement driving relation, and upon brake release the sleeve (72) and the support frame (84) and the escapement drive means (90) are moved axially against the force of the spring (78) by brake-retracting movements of the brake shoes (16 and 18) and by such movement cause the escapement drive means (90) to again act on the escapement driven member (96) to cause the adjuster nut (80) to further rotate arcuately to increase the effective length of the strut (30) and further adjust the brake.

8. A drum brake adjuster according to claim 6 or 7, wherein the sleeve (372) has a body portion (373) between one end and the other end of the sleeve (372), the body portion (373) being formed as a clip which in cross-section extends circumferentially more than 180° and less than 360° about the tube portion of the first strut section (352) and is made of a spring material so as to be capable of being clipped over the tube portion by lateral movement of the sleeve (372) relative to the tube portion and to be removed therefrom in a similar manner.

9. A drum brake adjuster according to claim 8, wherein the body portion (373) of the sleeve (372) is arcuate in cross-section throughout more than 180° and less than 360° so as to be removable from and replaceable on the tube portion of the first strut section (352) without the need for removal of the strut (30) from a drum brake in which it is installed.

10. A drum brake adjuster according to any one of claims 6 to 9, comprising temperature-responsive means (78, 104, 378) which is responsive, at and above a predetermined brake temperature above which it is not desirable to adjust the brake because of possible over-adjustment under such temperature conditions in the brake, to prevent the escapement drive means (90) from driving the escapement driven member (96) during a brake actuation and release cycle, thereby rendering the adjuster ineffective to change the brake adjustment as long as the brake temperature is at or above the predetermined brake temperature.

**Patentansprüche**

1. Trommelbremsen-Nachstellvorrichtung (50) zur Verwendung bei einer Trommelbremsenanordnung mit Mitteln (14) zum Ausfahren erster und zweiter Bremsklötze (16 und 18) zum Anlegen an eine Bremstrommel (12) in Bremsbeziehung und Mitteln (32) zum Zurückziehen der Bremsklötze (16 und 18) zum Lösen von der Bremstrommel (12) nach Lösen und Rückholen der Bremsklötze (16 und 18) zu einer durch die Trommelbremsen-Nachstellvorrichtung (50) bestimmten Nachstellage, wobei die Trommelbremsen-Nachstellvorrichtung (50) eine ausfahrbare Stütze (30) umfaßt, die ausgelegt ist, sich zwischen den ersten und zweiten Bremsklötzen (16 und 18) der zu betätigenden und lösenden und nachzustellenden Trommelbremse (10) zu erstrecken, wobei die ausfahrbare Stütze (30) umfaßt ein erstes Glied (52); ein teleskopartig in dem ersten Glied (52) und in koaxialer Beziehung mit diesem aufgenommenes zweites Glied (54), das erste Glied (52) ausgelegt ist, sich an den ersten Bremsklotz (16) anzulegen, und das zweite Glied ausgelegt ist, sich an den zweiten Bremsklotz (18) anzulegen, Federmittel (78) auf das erste Glied (52) einwirken, um das erste Glied (52) kontinuierlich zu dem zweiten Glied (54) hin zu drängen, ein Nachstellelement (80) an dem zweiten Glied (54) normalerweise an dem ersten Glied (52) in Abstützbeziehung anliegt, um die Minimallänge der stütze (30) zu begrenzen und an dem zweiten Glied (54) in einer Richtung zum ersten Glied (52) bewegbar ist, um die effektive Minimallänge der Stütze (30) zu erhöhen, wenn ausreichender Bremsklotzverschleiß und -beanspruchung eine Nachstellung der Bremse nötig machen, das Nachstellelement (80) ein angetriebenes Hemmglied (96) enthält, das zur Schaffung solcher Nachstellung schrittweise betätigbar ist; und Hemmantriebsmittel (90), das in einem Brems-Betätigungs- und -Löse-Zyklus, bei dem Bremsnachstellung erforderlich ist, mindestens einmal während eines solchen Brems-Betätigungs- und -Löse-Zyklus in Antriebsbeziehung mit dem angetriebenen Hemmglied (96) bringbar ist, das Hemmantriebsmittel (90) bei dieser Beaufschlagung des angetriebenen Hemmgliedes (96) das Nachstellelement (80) antreibt, um dasselbe an dem zweiten Glied (54) in einer Axialrichtung zu dem ersten Glied (52) hinzubewegen, so daß bei vollständig gelöster Bremse das erste Glied (52) abstützend bei erhöhter Stützen-Minimallängenstellung an dem Nachstellelement (80) anliegt, um die nachgestellte Lage der Bremsklötze (16 und 18) herzustellen; gekennzeichnet durch ein das erste Glied (52) und einen Abschnitt des zweiten Gliedes (54) teleskopartig und in Koaxialbeziehung mit dem ersten (52) und zweiten (54) Glied aufnehmendes drittes Glied (72), welches dritte Glied (72) ausgelegt ist, an dem ersten Bremsklotz (16) anzulegen, während das Federmittel (78) auf das dritte Glied (72) einwirkt, um das dritte Glied (72) kontinuierlich von dem ersten Glied (52) wegzudrängen, und daß das Hemmantriebsmittel (90) sich an dem dritten Glied (72) befindet.

2. Trommelbremsen-Nachstellvorrichtung nach Anspruch 1, bei der das Federmittel (78) eine temperatur-empfindliche Feder enthält, welche sich bei einer vorbestimmten Bremsentemperatur ausreichend zusammenzieht, um das Federmittel (78) unfähig zu machen, das dritte Glied (72) axial relativ zum Nachstellelement (80) und das zweite Glied (54) über einen ausreichenden Abstand zu bewegen, um das Hemmantriebsmittel (90) das angetriebene Hemmglied (96) antreiben zu lassen und dadurch die Nachstelleinrichtung unwirksam werden zu lassen, die Bremseneinstellung zu ändern, so lange die Bremsentemperatur sich bei oder über der vorbestimmten Bremsentemperatur befindet, und eine Über-Nachstellung der Bremse in diesem Zustand zu verhindern.

3. Trommelbremsen-Nachstellvorrichtung nach Anspruch 1 oder 2, bei der das Nachstellelement (80) mit einem Gewinde an dem zweiten Glied (54) angebracht ist und bei einer Drehbewegung relativ zu dem zweiten Glied (54) axial durch Gewindeeinwirkung in der Richtung zu dem ersten Glied (52) hin bewegbar ist, wobei das Hemmantriebsmittel (90) in Antriebsbeziehung mit dem angetriebenen Hemmglied (96) während des Bremsbetätigungsanteils eines Brems-Betätigungs- und -Löse-Zyklus, bei dem Bremsnachstellung erforderlich ist, in Eingriff bringbar ist, das Hemmantriebsmittel (90) bei diesem Eingriff mit dem angetriebenen Hemmglied (96) das Nachstellelement (80) drehend antreibt, um es durch Gewindewirkung an dem zweiten Glied (54) in einer Richtung axial zu dem ersten Glied (52) hin zu bewegen, und das Hemmantriebsmittel (90) weiter mit dem angetriebenen Hemmglied (96) während des Brems-Löse-Abschnitts eines solchen Zyklus in Antriebsbeziehung in Eingriff bringbar ist, wobei das Hemmantriebsmittel (90) in diesem Eingriff mit dem angetriebenen Hemmglied (96) das Nachstellelement (80) drehend antreibt, um dieses durch Gewindeeinwirkung weiter an dem zweiten Glied (54) in einer Richtung axial zu dem ersten Glied (52) hin zu bewegen.

4. Trommelbremsen-Nachstellvorrichtung nach Anspruch 3, bei der das angetriebene Hemmglied (96) eine radartige Mutter (80) mit Flächenzähnen (96, 98) an beiden Seiten ist und ein Hemmrad bildet, das Hemmantriebsmittel (90) ein allgemein U-förmiges Glied mit das Hemmrad (80) umfassenden Armen (92 und 94) ist und einen Hemmstein (100, 102) an jedem Arm (92 und 94) besitzt, das U-förmige Glied eine an dem dritten Glied (72) befestigte Leiste (88) besitzt, deren Achse senkrecht zur gemeinsamen Achse des ersten (52), des zweiten (54) und des dritten (72) Gliedes liegt, wobei das U-förmige Glied bogenförmig um die Leiste (88) bewegbar ist, die Hemmsteine (100, 102) mit den Zähnen (96, 98) in abwechselnder Antriebsbeziehung in Eingriff kommen, wenn das dritte Glied (52) relativ zu dem zweiten Glied (54) und dem angetriebenen Hemmglied (96) in einer Axialrichtung bei Brems-Anlegung und in der entgegengesetzten Axialrichtung bei Brems-Lösung bewegt wird, wobei die Hemmsteine (100, 102) auf die Zähne (96, 98) einwirken, um das angetriebene Hemmglied (96) an dem zweiten Glied (54) bogenförmig zu bewegen, wenn die Bewegungen des dritten Gliedes (72) ausreichen, erst den einen und dann den anderen Hemmstein (100, 102) zu einem benachbarten Zahn (96, 98) vorzuschieben, von dem aus, mit dem er zum Antriebseingriff ausgerichtet ist, während er in dem Brems-Lösezustand ist.

5. Trommelbremsen-Nachstellvorrichtung nach Anspruch 4, bei der das U-förmige Glied eine daran angebrachte temperatur-empfindliche Feder (104) besitzt, die an den Armen (92, 94) so angreift, daß sie zur Ausübung einer Federkraft fähig ist, die danach trachtet, die Arme (92, 94) auseinanderzuspreizen, wobei sich die temperatur-empfindliche Feder (104) dehnt mit einer Erhöhung der Bremsentemperatur, und sich bei einer vorbestimmten Bremsentemperatur ausreichend dehnt, um die Arme (92, 94) in einer Richtung axial von dem Hemmrad (80) weg nach außen zu bewegen, so daß die Hemmsteine (100, 102) nicht mit den Zähnen (96, 98) in Antriebseingriff kommen können, unabhängig von dem Ausmaß der Axialbewegung des dritten Gliedes (72), und dadurch die Nachstelleinrichtung zum Nachstellen der Bremse unwirksam werden lassen, so lange die Bremsentemperatur sich bei oder über der vorbestimmten Bremsentemperatur befindet, und so eine Über-Nachstellung der Bremse unter dieser Bedingung verhindert.

6. Trommelbremsen-Nachstellvorrichtung nach Anspruch 1, bei der das erste Glied (52) der ausfahrbaren Stütze (30) einen ersten Stützenabschnitt umfaßt, der an einem Ende mit einem Rohrabschnitt (60) mit einem offenen Ende (64) ausgebildet ist und das andere Ende (56) des ersten Stützenabschnitts ausgelegt ist, an dem ersten Klotz (16) anzugreifen, und das zweite Glied (54) der ausfahrbaren Stütze einen zweiten Stützenabschnitt umfaßt, der an einem Ende mit einem Innengewindeabschnitt (70) ausgebildet ist, welcher sich in den Rohrabschnitt (60) hinein erstreckt, und das andere Ende (68) des zweiten Stützenabschnitts ausgelegt ist, an dem zweiten Klotz (18) anzugreifen; bei der das Nachstellelement (80) eine auf den Gewindeabschnitt (70) des zweiten Stützenabschnitts aufgeschraubte Nachstellmutter umfaßt mit einer Seite, die mit dem offenen Ende (64) des Rohrabschnitts (60) des ersten Stützenteils in Eingriff bringbar ist und mit den Stützenteilen zusammenwirkt, um die effektive Länge der Stütze (30) zu bestimmen und dadurch die Lage der Klötze (16 und 18) zur Bremstrommel, wenn sie sich in Brems-Lösestellung befinden; bei der das dritte Glied (72) eine Hülse umfaßt mit einem an einem Ende (74) derselben ausgebildeten Federsitz (96), wobei das andere Ende (56) des ersten Stützenteils durch den Federsitz (76) so aufgenommen ist, daß der Rohrabschnitt (60) des ersten Stützenteils innerhalb der Hülse (72) aufgenommen ist und sich von dort in einer Richtung zur Nachstellmutter (80) nach außen erstreckt, die Hülse (72) weiter einen sich über die Nachstellmutter (80) hinaus erstreckenden Stützrahmen (84) besitzt, wobei das Hemmantriebsmittel (90) an dem Stützrahmen (84) angeordnet ist zum Eingriff in Hemmantriebsbeziehung mit dem angetriebenen Hemmglied (96) der Nachstellmutter (80); und bei dem das Federmittel (78) in der Hülse (72) aufgenommen ist und auf den Federsitz (76) und den ersten Stützenteil einwirkt, um den Rohrabschnitt (60) des ersten Stützenteils kontinuierlich in einer Richtung von der Hülse (72) nach außen und gegen die Nachstellmutter (80) zu drängen und kontinuierlich die Hülse (72) in einer Richtung axial von der Nachstellmutter (80) weg zu drängen, das Federmittel (78) auf Bremsbetätigung hin die Hülse (72) und den Stützrahmen (84) und das Hemmantriebsmittel (90) axial relativ zur Nachstellmutter (80) bewegt und auf ein ausreichendes Maß solcher Axialbewegung das Hemmantriebsmittel (90) auf das angetriebene Hemmglied (96) einwirken läßt, um die Nachstellmutter (80) bogenförmig drehen zu lassen, um die effektive Länge der Stütze (30) zu erhöhen und dadurch die Bremse nachzustellen.

7. Trommelbremsen-Nachstellvorrichtung nach Anspruch 6, bei der das an der Nachstellmutter (80) ausgebildete angetriebene Hemmglied (96) ein doppeltwirkend angetriebenes Hemmglied umfaßt, das an dem anderen Ende der Hülse (72) ausgebildete Hemmantriebsmittel (90) ein doppeltwirkendes Hemmantriebsmittel umfaßt, das angeordnet ist, mit dem doppeltwirkend angetriebenen Hemmglied (96) in Doppelwirkungs-Hemmantriebsbeziehung zu treten, und bei dem auf Bremsen-Lösung hin die Hülse (72) und der Stützrahmen (84) und das Hemmantriebsmittel (90) axial gegen die Kraft der Feder (78) durch Bremsrückholbewegungen der Bremsklötze (16 und 18) bewegt werden und durch diese Bewegung das Hemmantriebsmittel (90) wieder auf das angetriebene Hemmglied (96) einwirken lassen, um die Nachstellmutter (80) weiter bogenförmig drehen zu lassen, um die wirksame Länge der Stütze (30) zu erhöhen und die Bremse weiter nachzustellen.

8. Trommelbremsen-Nachstellvorrichtung nach Anspruch 6 oder 7, bei der die Hülse (372) einen Körperabschnitt (373) zwischen dem einen und dem anderen Ende der Hülse (372) besitzt, der Körperabschnitt (373) als eine Federspange ausgebildet ist, die sich im Querschnitt in Umfangsrichtung über mehr als 180° und weniger als 360° um den Rohrabschnitt des ersten Stützenteils (352) erstreckt und aus einem Federmaterial hergestellt ist, um so über den Rohrabschnitt durch eine Seitenbewegung der Hülse (372) relativ zum Rohrabschnitt aufgeschnappt und in einer gleichen Weise davon entfernt werden zu können.

9. Trommelbremsen-Nachstellvorrichtung nach Anspruch 8, bei der der Körperabschnitt (373) der Hülse (372) im Querschnitt über mehr als 180° und weniger als 360° gebogen vorhanden ist, um so von dem Rohrabschnitt des ersten Stützenteils (352) entfernbar und wieder auf ihn aufsetzbar zu sein, ohne daß es nötig ist, die Stütze (30) von einer Trommelbremse, bei der sie eingesetzt ist, zu entfernen.

10. Trommelbremsen-Nachstellvorrichtung nach einem der Ansprüche 6 bis 9, mit einem temperaturempfindlichen Mittel (78, 104, 378), das bei und über einer vorbestimmten Bremsentemperatur anspricht, über der es wegen möglicher Über-Nachstellung bei diesen Temperaturbedingungen der Bremse nicht erwünscht ist, die Bremse nachzustellen, um das Hemmantriebsmittel (90) zu hindern, das angetriebene Hemmglied (96) während eines Brems-Betätigungs- und -Löse-Zyklus anzutreiben und dadurch die Nachstelleinrichtung zur Änderung der Bremseinstellung unwirksam zu machen, so lange die Bremsentemperatur sich bei oder über der vorbestimmten Bremsentemperatur befindet.

## Revendications

1. Dispositif de réglage (50) pour frein à tambour destiné à être utilisé dans un frein à tambour ayant un dispositif (14) pour écarter une première et une seconde mâchoire (16 et 18) afin qu'elles viennent au contact du tambour (12) pendant un freinage, et un dispositif (32) destiné à rapprocher les mâchoires (16 et 18) afin qu'elles se séparent du tambour (12) lors du desserrage et à remettre les mâchoires (16 et 18) en position réglée déterminée par le dispositif (50) de réglage de frein, le dispositif (50) de réglage de frein comprenant une biellette extensible (30) destinée à être disposée entre la première et la seconde mâchoire (16 et 18) du frein (10) à tambour afin qu'elle soit commandée, libérée et réglée, la biellette extensible (30) comprenant un premier organe (52), un second organe (54) logé télescopiquement dans le premier organe (52) et placé coaxialement à celui-ci, le premier organe (52) étant destiné à coopérer avec la première mâchoire (16) et le second organe étant destiné à coopérer avec la seconde mâchoire (18), un dispositif à ressort (78) agissant sur le premier organe (52) et destiné à rappeler constamment ce premier organe (52) vers le second organe (54), un élément de réglage (80) porté par le second organe (54) et normalement placé au contact du premier organe (52) en butée contre celui-ci afin qu'il limite la longueur minimale de la biellette (30) et mobile sur le second organe (54) vers le premier organe (52) afin qu'il augmente la longueur minimale efficace de la biellette (30) lorsque la manoeuvre et l'usure des mâchoires nécessitent un réglage du frein, l'élément de réglage (80) comprenant un organe mené (96) d'échappement qui peut être commandé progressivement afin qu'il assure ce réglage, et un dispositif menant (90) d'échappement destiné à coopérer, dans un cycle de serrage et de desserrage du frein au cours duquel un réglage du frein est nécessaire, avec l'organe mené (96) d'échappement qu'il entraîne au moins une fois pendant un tel cycle de serrage et de desserrage du frein, le dispositif menant (90) d'échappement, lorsqu'il est ainsi au contact de l'organe mené (96) d'échappement, entraînant l'élément de réglage (80) afin qu'il le déplace sur le second organe (54) en direction axiale vers le premier organe (52), si bien que, lorsque le frein est totalement desserré, le premier organe (52) est en butée contre l'élément de réglage (80) pour une position de longueur minimale accrue de la biellette établissant une position réglée des mâchoires (16 et 18), caractérisé par un troisième organe (72) logeant télescopiquement le premier organe (52) et une partie du second organe (54), et placé coaxialement au premier et au second organe (52, 54), le troisième organe (72) étant destiné à être au contact de la première mâchoire (16), le dispositif à ressort (78) agissant sur le troisième organe (72) afin qu'il écarte constamment ce troisième organe (72) du premier organe (52), le dispositif menant (90) d'échappement étant placé sur le troisième organe (72).

2. Dispositif de réglage de frein à tambour selon la revendication 1, dans lequel le dispositif à ressort (78) comprend un ressort thermosensible qui, à une température prédéterminée du frein, se contracte suffisamment pour que le dispositif à ressort (78) ne puisse plus déplacer le troisième organe (72) en direction axiale par rapport à l'élément de réglage (80) et au second organe (54) sur une distance suffisante pour que le dispositif menant (90) d'échappement entraîne l'organe mené (96) d'échappement, si bien que l'organe de réglage ne peut plus assurer le réglage du frein tant que la température de celui-ci est supérieure ou égale à la température prédéterminée et un réglage excessif du frein est évité dans ces conditions.

3. Dispositif de réglage de frein à tambour selon la revendication 1 ou 2, dans lequel l'élément de réglage (80) est monté par vissage sur le second organe (54) et, lors de son mouvement de rotation par rapport au second organe (54), il se déplace axialement par vissage vers le premier organe (52), le dispositif menant (90) d'échappement est destiné à entraîner l'organe mené (96) d'échappement pendant la partie de serrage du frein dans un cycle de serrage et de desserrage dans lequel un réglage du frein est nécessaire, le dispositif menant (90) d'échappement, lorsqu'il coopère ainsi avec l'organe mené (96) d'échappement, entraîne l'élément de réglage (80) en rotation afin qu'il le déplace par vissage sur le second organe (54) en direction axiale vers le premier organe (52), et le dispositif menant (90) d'échappement peut en outre coopérer avec l'organe mené (96) d'échappement en l'entraînant pendant la partie de desserrage du cycle, le dispositif menant (90) d'échappement, lorsqu'il coopère ainsi avec l'organe mené (96) d'échappement, entraînant l'élément de réglage (80) en rotation afin qu'il le déplace par vissage supplémentaire sur le second organe (54) axialement vers le premier organe (52).

4. Dispositif de réglage de frein à tambour selon la revendication 3, dans lequel l'organe mené (96) d'échappement est un écrou (80) analogue à une roue ayant des dents latérales (96, 98) sur chaque face et formant une roue d'échappement, le dispositif menant (90) d'échappement étant un organe ayant une forme générale en U et comportant des bras (92 et 94) qui chevauchent la roue d'échappement (80), ayant une palette (100, 102) sur chaque bras (92 et 94), l'organe en U ayant un bord (88) fixé sur le troisième organe (72) avec son axe perpendiculaire à l'axe commun du premier (52), du second (54) et du troisième organe (72), l'organe en U étant mobile suivant un trajet courbe autour du bord (88) alors que les palettes (100, 102) sont au contact des dents (96, 98) et l'entraînent en alternance lorsque le troisième organe (72) se déplace par rapport au second organe (54) et à l'organe mené (96) d'échappement dans un sens en direction axiale lors du serrage du frein et dans l'autre sens en direction axiale lors du desserrage du frein, les palettes (100, 102) agissant sur les dents (96, 98) et déplaçant l'organe mené (96) d'échappement en courbe sur le second organe (54) lorsque les déplacements du troisième organe (72) sont suffisants pour que la première puis l'autre palette (100, 102) avancent vers une dent adjacente (96, 98) depuis la dent sur laquelle elles sont alignées afin que cette dent soit entraînée pendant le desserrage du frein.

5. Dispositif de réglage de frein à tambour selon la revendication 4, dans lequel l'organe en U a un ressort thermosensible (104) monté sur lui et coopérant avec les bras (92, 94) afin qu'il puisse exercer une force d'élasticité tendant à écarter les bras (92, 94) l'un de l'autre, le ressort thermosensible (104) s'élargissant lors d'une augmentation de la température du frein et, à une température prédéterminée du frein, s'élargissant suffisamment pour que les bras (92, 94) se déplacent vers l'extérieur dans la direction axiale en s'écartant de la roue d'échappement (80) si bien que les palettes (100, 102) ne peuvent pas venir au contact des dents (96, 98) et les entraîner, indépendamment de l'amplitude du déplacement axial du troisième organe (72), si bien que le dispositif de réglage est rendu inopérant pour le réglage du frein dans la mesure où la température du frein est supérieure ou égale à la température prédéterminée, et qu'un réglage excessif du frein est évité dans ces conditions.

6. Dispositif de réglage de frein à tambour selon la revendication 1, dans lequel le premier organe (52) de la biellette extensible (30) comporte un premier tronçon de biellette ayant, à une première extrémité, une partie de tube (60) qui a une extrémité ouverte (64), l'autre extrémité (56) du premier tronçon de biellette étant destinée à être au contact de la première mâchoire (16), et le second organe (54) de la biellette extensible comporte un second tronçon de biellette ayant, à une première extrémité, une partie filetée (70) qui pénètre dans la partie de tube (60), l'autre extrémité (68) du second tronçon de biellette étant destinée à coopérer avec la seconde mâchoire (18), dans lequel l'élément de réglage (80) comporte un écrou de réglage vissé sur la partie filetée (70) du second tronçon de biellette et ayant une face destinée à être au contact de l'extrémité ouverte (64) de la partie de tube (60) du premier tronçon de biellette et coopérant avec les tronçons de biellette afin qu'il détermine la longueur efficace de la biellette (30) et en conséquence la position des mâchoires (16 et 18) par rapport au tambour (12) du frein à l'état desserré, dans lequel le troisième organe (72) comporte un manchon ayant un siège (76) de ressort formé à une première extrémité (74) du manchon alors que l'autre extrémité (56) du premier tronçon de biellette est logée dans le siège (76) si bien que la partie de tube (60) du premier tronçon de biellette se loge dans le manchon (72) et en dépasse à l'extérieur, vers l'écrou de réglage (80), le manchon (72) ayant en outre un cadre de support (84) disposé par-dessus l'écrou de réglage (80), le dispositif menant (90) d'échappement étant placé sur le cadre de support (84) afin qu'il soit au contact de l'organe mené (96) d'échappement de l'écrou de réglage (60) en position d'entraînement par échappement, et dans lequel le dispositif à ressort (78) est logé dans le manchon (72) et agit sur le siège (76) et le premier tronçon de biellette afin qu'il repousse constamment la partie de tube (60) du premier tronçon de biellette vers l'extérieur du manchon (72) et contre l'écrou de réglage (80) et qu'il repousse constamment le manchon (72) axialement à distance de l'écrou de réglage (60), le dispositif à ressort (78), lors de la manoeuvre du frein, déplaçant le manchon (72), le cadre de support (84) et le dispositif menant (90) d'échappement axialement par rapport à l'écrou de réglage (80), après un déplacement axial suffisant, provoquant l'action du dispositif menant (90) d'échappement sur l'organe mené (96) d'échappement afin que l'écrou de réglage (80) tourne suivant un trajet courbe augmentant la longueur efficace de la biellette (30) et réglant ainsi le frein.

7. Dispositif de réglage de frein à tambour selon la revendication 6, dans lequel l'organe mené (96) d'échappement formé sur l'écrou de réglage (80) comporte un organe mené d'échappement à double effet, le dispositif menant (90) d'échappement formé à l'autre extrémité du manchon (72) comporte un dispositif menant d'échappement à double effet disposé afin qu'il soit au contact de l'organe mené (96) d'échappement à double effet en l'entraînant, et, après desserrage du frein, le manchon (72), le cadre de support (84) et le dispositif menant (90) d'échappement se déplacent axialement malgré la force du ressort (78) lors des déplacements de desserrage du frein provoquant le rapprochement des mâchoires (16 et 18) et, au cours de ce déplacement, provoquent l'action à nouveau du dispositif menant (90) d'échappement sur l'organe mené (96) d'échappement afin que l'écrou de réglage (80) tourne encore suivant un trajet courbe et augmente la longueur efficace de la biellette (30) et un réglage supplémentaire du frein.

8. Dispositif de réglage de frein à tambour selon la revendication 6 ou 7, dans lequel le manchon (372) a une partie de corps (373) placée entre la première extrémité et l'autre extrémité du manchon (372), la partie de corps (373) étant formée par une agrafe qui, en coupe, recouvre circonférentiellement plus de 180° et moins de 360° autour de la partie de tube du premier tronçon (352) de biellette, et est formée d'un matériau à ressort afin qu'il puisse être agrafé sur la partie de tube par déplacement latéral du manchon (372) par rapport à la partie de tube et qu'il puisse en être retiré de manière analogue.

9. Dispositif de réglage de frein à tambour selon la revendication 8, dans lequel la partie de corps (373) du manchon (372) a une section courbe recouvrant plus de 180° et moins de 360° afin qu'elle puisse être retirée de la partie de tube du premier tronçon (352) de biellette et remise en place sur celui-ci sans qu'il soit nécessaire de retirer la biellette (30) du frein à tambour dans lequel elle est installée.

10. Appareil de réglage de frein à tambour selon l'une quelconque des revendications 6 à 9, comprenant un dispositif thermosensible (78, 104, 378) qui, à une température prédéterminée du frein et au-delà de cette température à laquelle il n'est pas souhaitable de régler le frein à cause d'un réglage excessif possible dans ces conditions de température du frein, empêche l'entraînement de l'organe mené (96) d'échappement par l'organe menant (90) d'échappement pendant le cycle de serrage et de desserrage du frein, si bien que le dispositif de réglage ne peut plus changer le réglage du frein tant que la température du frein est supérieure ou égale à la température prédéterminée.

EP 0 216 478 B1

Fig. 1

Fig. 2

Fig. 3

Fig. 4

Fig.5

Fig.6

Fig.7

Fig.8

Fig.9

Fig.10

Fig.11

Fig.12